# EUROPÄISCHE PATENTSCHRIFT

(11) **EP 3 355 678 B1**
(45) Veröffentlichungstag und Bekanntmachung des Hinweises auf die Patenterteilung: **18.08.2021**
(21) Anmeldenummer: 16775465.4
(22) Anmeldetag: 22.09.2016
(51) Int. Cl.: A01D 41/14, A01D 45/02

(54) **VORRICHTUNG ZUR ERNTE VON STÄNGELIGEM HALMGUT MIT VERSTELLBAREN PFLÜCKPLATTEN**
HARVESTING DEVICE FOR STANDING CROP WITH ADJUSTABLE STRIPPER PLATES
DISPOSITIF DE RÉCOLTE AVEC UN MÉCANISME DE REGLAGE DES PLAQUES D'EXTRACTION

(30) Priorität: 28.09.2015 DE 102015116375
(43) Veröffentlichungstag der Anmeldung: 08.08.2018
(73) Patentinhaber: Carl Geringhoff GmbH & Co. KG, 59227 Ahlen (DE)
(72) Erfinder: ALBINGER, Bernd, 88348 Bad Saulgau (DE); HEMMESMANN, André, 48336 Sassenberg (DE); BEUMKER, Martin, 59329 Wadersloh (DE)
(74) Vertreter: Weeg, Thomas
(86) Internationale Anmeldenummer: PCT/EP2016/001585
(87) Internationale Veröffentlichungsnummer: WO 2017/054912

(56) Entgegenhaltungen:
- FR-A- 1 509 507
- US-A- 5 060 464
- US-A- 5 680 750
- US-A- 5 878 560
- US-A1- 2011 173 942

## Beschreibung

Die vorliegende Erfindung bezieht sich auf eine Vorrichtung zur Ernte von stängeligem Halmgut nach dem Oberbegriff des Anspruchs 1. Die gattungsgemäßen Vorrichtungen zur Ernte von stängeligem Halmgut werden zumeist als Maispflückvorsätze an Mähdrescher angebaut, um damit Körnermais zu ernten. In den Maispflückvorsätzen werden die Maiskolben von den Stängeln getrennt, die Stängel und Blätter werden auf den Boden abgeworfen und die gepflückten Maiskolben werden in den Mähdrescher abgefördert, um sie dort auszudreschen.

Der Pflückvorgang erfolgt, indem der Pflanzenstängel mit zumindest einem Pflückrotor nach unten gezogen wird, nachdem der Pflanzenstängel in den von zumindest einer seitlich angeordneten Pflückplatte begrenzten Pflückspalt eingelaufen ist. Wenn ein an dem Maisstängel hängender Maiskolben den Pflückspalt erreicht, bleibt er an der oder den Pflückplatten hängen, während der Stängel weiter nach unten gerissen wird, weil er breiter als der Pflückspalt ist. Dadurch reißt der Maiskolben vom Stängel ab.

Dies funktioniert aber nur, wenn der Pflückspalt schmaler als der Maiskolben ist. Der Pflückspalt muss aber noch breit genug sein, um nicht den Einlauf der Maisstängel zu behindern. Da je nach Maissorte, Feld und Aufwuchsbedingungen die Dicke der Maisstängel und Maiskolben variiert, ist es bekannt, die Pflückplatten verstellbar in der Vorrichtung anzuordnen. Die mit den Umlaufförderern endlos umlaufenden Mitnehmer erfassen die abgetrennten Maiskolben und fördern diese in den Bereich der Querförderschnecke, die die abgetrennten Maiskolben mittig der Vorrichtung zusammenführt und nach hinten an den Mähdrescher abgibt.

Die aus dem Stand der Technik bekannten Vorrichtungen zur Verstellung der Pflückplatten benötigen einen gewissen Bauraum und Bewegungsraum zwischen den Pflückreihen. Hinderlich sind hier insbesondere auch die Längsträger, die zwischen benachbarten Pflückreihen angeordnet sind.

In einer Vorrichtung, die in der Schrift US 5,680,750 offenbart ist, wird ein Verstellmechanismus genutzt, bei dem pro Pflückplatte ein unterhalb der Pflückplattenebene angeordneter Verstellhebel auf eine mit der Pflückplatte verbundene erste rotatorisch bewegliche Ankerplatte wirkt. Die Ankerplatte weist eine Gelenkachse auf, die exzentrisch zur Drehachse der Ankerplatte ist und über den die Ankerplatte mit der zugehörigen Pflückplatte verbunden ist. Eine vom Verstellhebel erzeugte rotatorische Bewegung der Ankerplatte wird über die Gelenkachse auf die Pflückplatte übertragen. Über eine weitere Gelenkachse ist ein Lenker mit der ersten Ankerplatte verbunden, durch den die vom Verstellhebel erzeugte rotatorische Bewegung der ersten Ankerplatte auf eine weiter vorne zur Spitze des Pflücker hin gelegene zweite Ankerplatte übertragen wird. Die zweite Ankerplatte verfügt ebenfalls über eine exzentrisch zur Drehachse der Ankerplatte angeordnete Gelenkachse, die mit der Pflückplatte verbunden ist. Mit der rotatorischen Bewegung der beiden Ankerplatten wird die Pflückplatte parallel verschoben. Die jeweils auf einer festen Drehachse abgestützten Ankerplatten bewirken mit ihrer entsprechend synchronisierten rotatorischen Bewegung eine lineare Verschiebung der mit ihnen verbundenen Pflückplatte quer zum Pflückspalt.

Die aus dem Stand der Technik bekannte Vorrichtung ist auf Reihenweiten des stängeligen Halmguts von 76 cm (30 Zoll) ausgelegt und funktioniert dafür zufrieden stellend. Im Ackerbau werden nun aber halbierte Reihenweiten von 38 cm (15 Zoll) für den Anbau von stängeligem Halmgut befürwortet. Für solche Reihenweiten ist die herkömmliche Verstelltechnik der Pflückplatten jedoch nicht brauchbar, weil sie zu viel Baubreite beansprucht, insbesondere, wenn beide Pflückplatten einer Pflückreihe in Querrichtung verstellbar sein sollen. Die bekannte Vorrichtung ist zudem relativ aufwendig. Aus der gattungsgemäßen Schrift US 5,060,464 ist eine Verstellvorrichtung bekannt, bei der die Pflückplatten über eine Welle verstellt werden, auf der drehfest Ankerplatten aufgesetzt sind, die über mit ihnen verbundene Zug- und Druckstangen Rotationsbewegungen der Welle in Schub- und Zugbewegungen übertragen. Die Welle ist von einem Lenker angetrieben, der annähernd senkrecht unter der Welle steht und eine größere Bauhöhe erforderlich macht. Die Zug- und Schubstangen sind nicht spielfrei, weil sich ihre räumliche Lage der Drehstellung der Ankerplatten anpassen können muss. Die Schub- und Zugstangen müssen zudem genau eingestellt werden, was die die volle Arbeitsbreite eines Pflückers einen erheblichen Aufwand verursacht. Über die Ankerplatten können nur sehr kurze Verstellwege übertragen werden, wenn die Bauhöhe des Verstellmechanismusses gering bleiben soll.

Demgemäß ist es die Aufgabe der vorliegenden Patentanmeldung, einen Verstellmechanismus zu schaffen, der eine geringere Baubreite beansprucht. Außerdem soll der technische Aufwand für den Verstellmechanismus verringert werden.

Die Aufgabe wird für eine gattungsgemäße Vorrichtung durch die kennzeichnenden Merkmale des Anspruchs 1 gelöst.

Durch die erfindungsgemäße Lösung ist es möglich, über eine Ankerplatte zwei Pflückplatten gleichzeitig zu verstellen. Als benachbarte Pflückplatten bieten sich die linke Pflückplatte einer rechten Pflückreihe und die rechte Pflückplatte einer linken Pflückreihe an, wobei die beiden Pflückreihen benachbart sind.

Die Nutzung einer Ankerplatte zur Querverstellung von zwei benachbarten Pflückplatten eröffnet zwei Nutzungsmöglichkeiten: in einer ersten Konfiguration wird ein Pflückspalt mit zwei verstellbaren Pflückplatten pro Reihe ausgestattet. In dieser Konfiguration ist pro Reihe rein rechnerisch nur ein Ankerplatten-Verstellmechanismus erforderlich, wobei jeder Ankerplatten-Verstellmechanismus auf eine von zwei Pflückplatten einer Pflückreihe wirkt. Die beiden Pflückplatten einer Pflückreihe werden also von zwei Seiten her von jeweils einem Ankerplatten-Verstellmechanismus verstellt, der jeweils noch eine Pflückplatte einer benachbarten Pflückreihe zusätzlich verstellt. In einer zweiten Konfiguration wird ein Pflückspalt mit einer verstellbaren und einer fixen Pflückplatte pro Pflückreihe ausgestattet. Hier ist dann nur an jeder zweiten Reihe ein Ankerplatten-Verstellmechanismus erforderlich, der ebenfalls auf eine von zwei Pflückplatten einer Pflückreihe wirkt und zusätzlich noch eine Pflückplatte einer benachbarten Pflückreihe verstellt.

Grundsätzlich ist es möglich, zwei Pflückplatten mit nur einer einzigen Ankerplatte in Querrichtung zu verstellen, wenn die Pflückplatten über eine entsprechende Führung verfügen, in der sie sich nicht verkanten und verklemmen können. Da die Pflückplatten sich über die volle Länge eines Pflückspaltes erstrecken, können sich bei der Verwendung von nur einer Ankerplatte zur Querverstellung aber auch größere Hebelkräfte ergeben, die auf den Verstellmechanismus einwirken und eine einwandfreie dauerhafte Funktion der Querverstellung unter schwierigen Erntebedingungen beeinträchtigen könnten. Deshalb können pro Pflückplatte auch zwei Ankerplatten vorgesehen sein, die entlang des Pflückspalts im vorderen und hinteren Bereich einer Pflückplatte angeordnet und über einen Lenker miteinander verbunden sind, so dass sich bei einer Verstellbewegung des Verstellhebels eine synchrone rotatorische Bewegung beider auf eine Pflückplatte wirkenden Ankerplatten ergibt.

Durch die Verstellung von zwei Pflückplatten mit nur einem Ankerplatten-Verstellmechanismus wird die Zahl der in einer Vorrichtung zu verbauenden Ankerplatten-Verstellmechanismen um die Hälfte gekürzt. Dadurch verringert sich die Baubreite der Vorrichtung erheblich. Zusätzlich verringert sich auch der maschinenbauliche Aufwand, und das Gewicht der Vorrichtung sinkt durch die geringere Zahl an Verstellmechanismen.

Bei den beiden äußeren Pflückreihen eines Maispflückers fehlt der jeweils an der Außenseite platzierten Pflückplatte naturgemäß jeweils eine benachbarte Pflückplatte, so dass dort für diese Pflückplatten entweder keine Verstellung vorgesehen ist oder die Verstellung durch einen Mechanismus erfolgt, bei dem keine Ankerplatte verwendet wird, die zwei Gelenkachsen aufweist, über die benachbarte Pflückplatten mit dieser Ankerplatte verbunden sind.

Die Ankerplatten sind drehfest auf einer jeweiligen Welle gelagert, die durch den Längsträger hindurch bis zur Unterseite des Längsträgers hinabreicht, und der Verstellhebel ist drehfest mit der Welle verbunden. Über die jeweiligen Wellen und deren Betätigung von der Unterseite der Vorrichtung her können die Längshebel auf der Unterseite der Vorrichtung angeordnet werden, wo sie den Einlauf der Maisstängel in den Pflückspalt und den Pflückvorgang in den Pflückeinheiten nicht behindern. Die Verstellhebel können vom Angriffspunkt an den Wellen jeweils in Richtung der Rückseite der Vorrichtung geführt sein, so dass sie sich nur um ein geringes Maß in Querrichtung zur Vorfahrtrichtung der Erntemaschine erstrecken. Dadurch bieten die Verstellhebel wenig Stirnfläche, mit der die Verstellhebel mit Hindernissen oder Erntegutresten kollidieren können. An der Rückseite der Vorrichtung können die Verstellhebel leicht und gut zugänglich betätigt werden. Mehrere Verstellhebel können durch eine Koppelstange miteinander verbunden sein, um durch ihre Betätigung mehrere Pflückplatten gleichzeitig mit einer Stellbewegung auf ein gewünschtes Maß einzustellen.

Wenn in den Anmeldungsunterlagen von einer Querrichtung die Rede ist, so ist damit eine Richtung quer zur Längserstreckungsrichtung des Pflückspaltes gemeint. Der Pflückspalt erstreckt sich üblicherweise parallel zur Vorfahrtrichtung der Erntemaschine in den Bestand des Ernteguts hinein. Mit einer rotatorischen Bewegung ist eine Dreh- oder Schwenkbewegung gemeint.

Jede in Querrichtung verstellbare Pflückplatte mit zwei separaten Ankerplatten über eine jeweilige Gelenkachse verbunden, wobei die Ankerplatten beabstandet zueinander entlang des Pflückspaltes angeordnet sind. Durch die Verwendung von zwei Ankerplatten, die im Abstand zueinander angeordnet sind und gemeinsam die damit verbundenen Pflückplatten in Querrichtung verstellen, kann eine gleichmäßige Parallelverschiebung der Pflückplatten mit ihren den Pflückspalt begrenzenden seitlichen Kanten erfolgen, so dass sich die Breite des Pflückspaltes über dessen Länge bei einer Verstellbewegung gleichmäßig von den Ankerplatten gesteuert verändert.

Die Ankerplatten sind auf der Oberseite eines jeweils zwischen zwei benachbarten Pflückspalten angeordneten Längsträgers angeordnet. Auf der Oberseite des Längsträgers befinden sich die Ankerplatten in einer geschützten Zone und können bei bodennaher Führung der Vorrichtung bei der Erntearbeit nicht von Hindernissen beschädigt oder in ihrer Funktion von am Boden liegenden oder von den Ankerplatten mitgenommenen Pflanzenteilen beeinträchtigt werden. Die Verschmutzungsgefahr ist verringert und die Wartung von oben her einfacher.

Nach einer Ausgestaltung der Erfindung sind die Ankerplatten unterhalb der einem Längsträger zugeordneten Fördereinheiten angeordnet. Die Ankerplatten werden durch die Fördereinheiten abgedeckt und zusätzlich geschützt. Durch die Höhenstaffelung der Ankerplatten und der zugehörigen Verstellmechanik sowie der Fördereinheiten wird Baubreite eingespart, was für die Realisierbarkeit der 38 cm (15 Zoll) - Reihenweiten von erheblicher Bedeutung ist.

Nach einer Ausgestaltung der Erfindung sind die Wellen der Umlenkräder der Fördereinheiten in einem Anstellwinkel schräg zur Pflückspaltebene angestellt. Dadurch stehen die Fördereinheiten schräg angestellt und satteldachartig über den Ankerplatten, wodurch zusätzlich Baubreite eingespart wird. Die satteldachartige Anordnung der Fördereinheiten schafft darunter einen Bauraum, in dem die Ankerplatten gut angeordnet werden können, ohne dass dafür die Ebene der Pflückspalte oder die Förderebene der Fördereinheiten angehoben werden müsste. Die Pflückspaltebene wird definiert durch die räumliche Lage einer Geraden, die die dem Pflückspalt zugewandten Seiten der Pflückplatten miteinander verbindet.

Nach einer Ausgestaltung der Erfindung sind die Pflückplatten in Längsführungen gehalten. Durch die Führung in Längsführungen ergeben sich bei Verstellbewegungen der Ankerplatten definierte Bewegungen der Pflückplatten. Die Pflückplatten können dadurch sehr genau auf eine jeweils gewünschte Breite des Pflückspaltes eingestellt werden.

Es wird ausdrücklich darauf hingewiesen, dass die vorstehend erläuterten Ausgestaltungen der Erfindung jeweils für sich, aber auch in einer beliebigen Kombination miteinander mit dem Gegenstand des Hauptanspruchs kombinierbar sind.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher beschrieben werden. Es zeigen:
- Fig. 1:: eine Ansicht von schräg oben auf zwei Pflückreihen einer Vorrichtung,
- Fig. 2:: eine seitliche Ansicht auf eine Pflückeinheit,
- Fig. 3:: eine Ansicht auf die Pflückplattenverstellungen für zwei Pflückplattenpaare,
- Fig. 4:: eine Ansicht von unten auf eine Vorrichtung mit einer feststehenden Pflückplatte pro Pflückerreihe, und
- Fig. 5:: eine Ansicht von unten auf eine Vorrichtung mit zwei beweglich verstellbaren Pflückplatten pro Pflückerreihe.

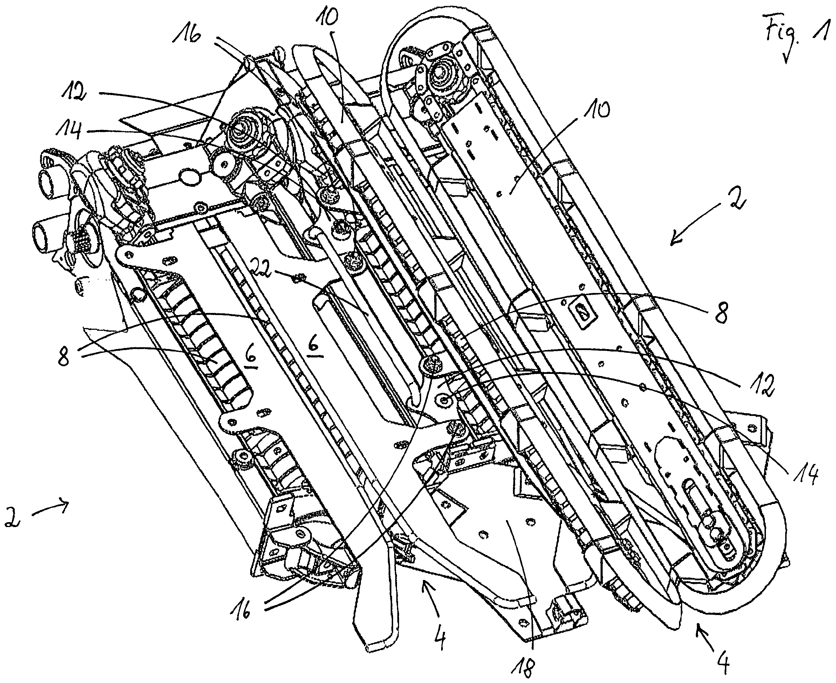

In Fig. 1 ist eine Ansicht von schräg oben auf zwei Pflückreihen eines Maispflückers gezeigt, wobei die linke Pflückeinheit 2 teilweise demontiert gezeigt ist. Die beiden Pflückeinheiten 2 verfügen über einen Pflückspalt 4, an den seitlich Pflückplatten 6 angrenzen. Unterhalb der Pflückplatten 6 befinden sich Pflückrotoren 8, darüber sind Fördereinheiten 10 angeordnet. Bei der rechten Pflückeinheit 2 ist die Hüllkurve der an den Umlaufförderern befestigten Mitnehmer als Umlaufbahn zeichnerisch dargestellt. Die Achsen der Umlenkräder der beiden Umlaufförderer sind zur Ebene der Pflückplatten 6 und des von diesem begrenzten Pflückspaltes schräg angestellt.

Durch die bei der linken Pflückeinheit 2 demontierten Fördereinheiten 10 sind aus der Ansicht von schräg oben die beiden Ankerplatten 12 erkennbar, die mit der Drehachse 14 fest verbunden und mit der Drehachse 14 drehbar sind. In den beiden Ankerplatten 12 sind Gelenkachsen 16 ausgebildet, über die die Ankerplatten 12 mit benachbarten Pflückplatten 6 verbunden sind. Jede Ankerplatte 12 weist zwei Gelenkachsen 16 auf, über die diese Ankerplatte 12 mit jeweils eine Pflückplatte 6 verbunden ist.

Die beiden Ankerplatten 12 sind auf der Oberseite eines Längsträgers 18 angeordnet. Der Längsträger 18 ist an einem sich am stromabwärts gelegenen Ende einer Pflückeinheit 2 befindlichen Querrahmen eines Maispflückers befestigt. Der Längsträger 18 dient dem Zweck, daran die einzelnen Bauteile einer Pflückeinheit 2 zu befestigen. Die Längsträger 18 befinden sich im Normalfall zwischen den Pflückspalten 4, damit der Gutfluss des Ernteguts durch den Pflückspalt 4 während der Erntearbeit nicht behindert wird.

In dem gezeigten Ausführungsbeispiel wird die Drehachse 14 mit einem Verstellhebel 20 verdreht, der in Fig. 1 nicht näher gezeigt ist. In Fig. 1 erkennbar ist allerdings der Lenkhebel 22, durch den die beiden Ankerplatten 12 miteinander verbunden sind. Wenn eine der beiden Ankerplatten 12 eine Drehbewegung ausführt, wird diese über den Lenkhebel 22 auf die andere Ankerplatte 12 übertragen.

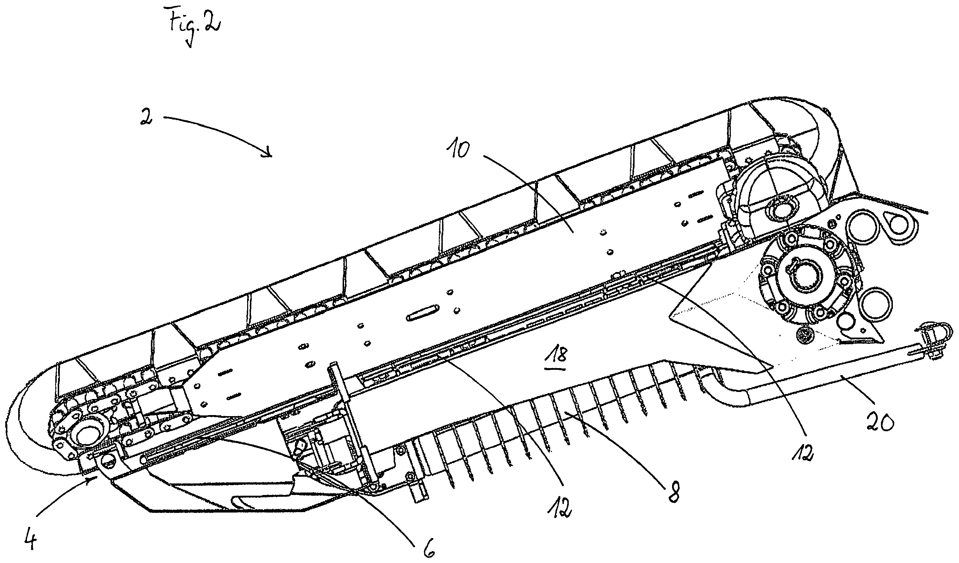

In Fig. 2 ist eine seitliche Ansicht auf eine Pflückeinheit 2 dargestellt. In der Seitenansicht ist die schräge Ebene erkennbar, in der die Pflückplatten 6 von vorne nach hinten ansteigend angeordnet sind. In Querrichtung zur Längserstreckungsachse der Pflückspalte 4 sind die Pflückplatten 6 allerdings annähernd waagerecht angeordnet. In der Seitenansicht ist gut erkennbar, dass die Fördereinheiten 10 oberhalb der Ankerplatten 12 und diese wiederum auf der Oberseite des Längsträgers 18 angeordnet sind. In der Seitenansicht ist auch erkennbar, dass sich der Verstellhebel 20, der auf die Drehachse 14 der stromabwärts gelegenen Ankerplatte 12 einwirkt, unterhalb des Längsträgers 18 befindet. Der Verstellhebel 20 erstreckt sich von der Drehachse 14 ausgehend in eine Richtung nach hinten zum stromabwärts gelegenen Ende der Vorrichtung. Dort ist der Verstellhebel 20 mit einer Koppelstange verbindbar, über die eine einheitliche Verstellung der Pflückplatten von mehreren Pflückeinheiten 2 möglich ist.

Unterhalb des Längsträgers 18 befinden sich außerdem die Pflückrotoren 8. Durch die Anordnung der Verstellvorrichtung zur Querverstellung der Pflückplatten 6 zwischen der Fördereinheit 10 und dem Längsträger 18 wird in Querrichtung zum Pflückspalt 4 Baubreite eingespart, ohne dass deshalb aber die Bauhöhe einer Pflückeinheit 2 erheblich erhöht wäre.

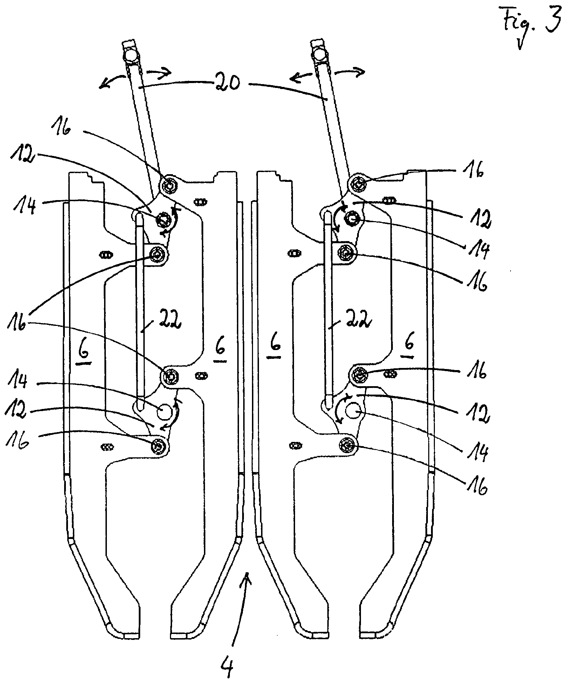

In Fig. 3 ist eine Ansicht auf die Pflückplattenverstellungen für eine mittlere und zwei dazu benachbarte Pflückspalte 4 gezeigt. Jeweils zwei Pflückplatten 6 bilden ein Paar, das über zwei gemeinsame Ankerplatten 12 in Querrichtung verstellbar ist.

Aus der Ansicht von oben ist gut erkennbar, dass die vier Ankerplatten 12 durch eine entsprechende Betätigung der Verstellhebel 20 in Pfeilrichtung ebenfalls um die Drehachse 14 drehbar sind. Bei einer entsprechenden Drehbewegung verlagern sich die Gelenkachsen 16 entsprechend. Da die Pflückplatten 6 über die Gelenkachsen 16 mit den Ankerplatten 12 verbunden sind, entsteht aus der Schwenkbewegung der Ankerplatten 12 automatisch auch eine Querverschiebung der Pflückplatten 6. Bei einer Querverschiebung der Pflückplatten 6 verändert sich die Breite des Pflückspaltes 4, je nach dem, in welche Richtung die Pflückplatten 6 bewegt werden.

Durch die Verstellung der beiden Paare von Pflückplatten 6 über die Betätigung der beiden Verstellhebel 20 werden im Ausführungsbeispiel insgesamt vier Pflückplatten 6 bewegt, wovon zwei Pflückplatten 6 den mittleren Pflückspalt 4 begrenzen und die beiden äußeren einzelnen Pflückplatten 6 eine Seite eines benachbarten Pflückspaltes 4 bilden.

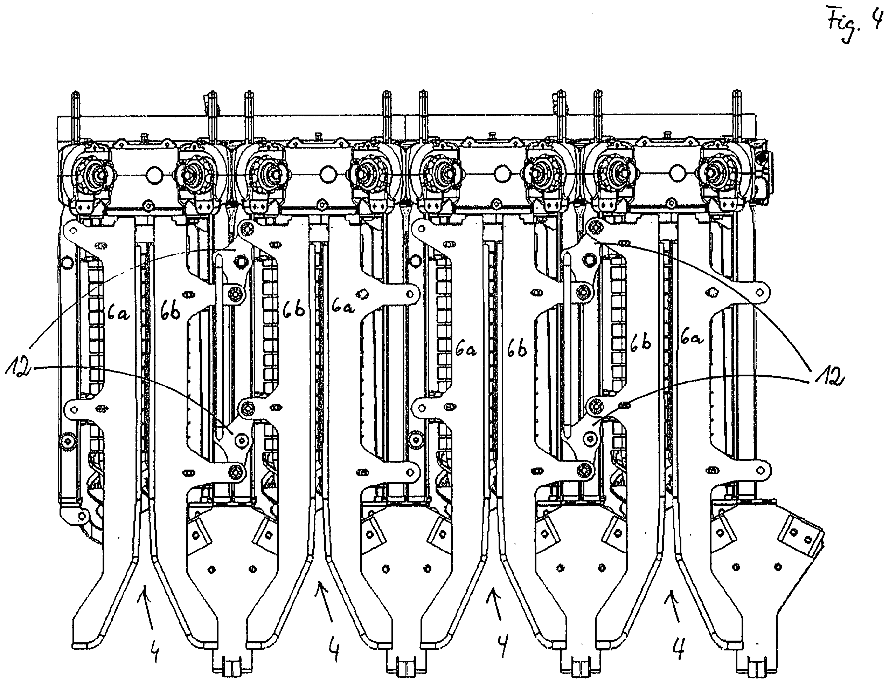

In Fig. 4 ist eine Ansicht von unten auf eine Vorrichtung mit einer feststehenden Pflückerplatte 6a pro Pflückeinheit 2 gezeigt. In den dargestellten Pflückeinheiten 2 ist nur jeweils eine Pflückplatte 6b über jeweils zwei Ankerplatten 12 in Querrichtung verstellbar.

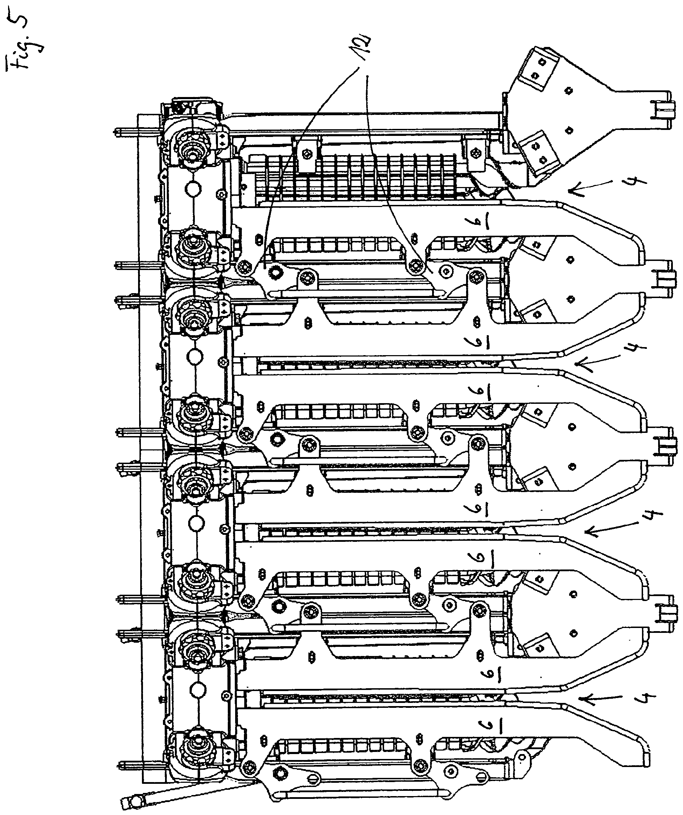

In Fig. 5 ist eine Ausführung einer Vorrichtung gezeigt, bei der aus einer Ansicht von unten pro Pflückeinheit 2 beide Pflückplatten einer jeweiligen Pflückeinheit 2 in Querrichtung über Ankerplatten 12 beweglich sind.

Die Fig. 4 und 5 illustrieren somit zwei verschiedene Ausführungen, bei der pro Pflückspalt 4 entweder nur eine Pflückplatte 6 in Querrichtung verstellbar ist und die Pflückplatte starr mit dem Längsträger 18 verbunden ist oder beide Pflückplatten 6 pro Pflückspalt 4 verstellbar sind, wobei eine Ankerplatte 12 aber immer nur eine Pflückplatte 6 pro Pflückspalt 4 betätigt, aber auch jeweils eine Pflückplatte von zwei benachbarten Pflückspalten 4.

Das vorstehend beschriebene Ausführungsbeispiel dient nur der Erläuterung der Erfindung. Die Erfindung ist nicht auf das gezeigte Ausführungsbeispiel beschränkt. Dem Fachmann bereitet es keine Schwierigkeiten, das Ausführungsbeispiel auf eine ihm als geeignet erscheinende Art abzuwandeln, um es an einen konkreten Anwendungsfall anzupassen, diese Anpassung ist durch die anhängigen Ansprüche beschränkt.

## Patentansprüche

1. Vorrichtung zur Ernte von stängeligem Halmgut mit
- einer Anzahl von nebeneinander am Rahmen der Vorrichtung angeordneten Pflückeinheiten (2), die jeweils einen Pflückspalt (4) seitlich begrenzende und in Querrichtung verstellbare Pflückplatten (6) und zumindest einen sich darunter befindlichen Pflückrotor (8) aufweisen,
- den jeweiligen Pflückeinheiten (2) zugeordnete Fördereinheiten (10), die als umlaufend angetriebene Umlaufförderer, die auf gegenüberliegenden Seiten oberhalb eines Pflückspaltes (4) angeordnet und mit an den Umlaufförderern befestigten Mitnehmern ausgebildet sind, und
- einer stromabwärts der Fördereinheiten (10) angeordneten Querfördereinrichtung, wobei die Querverstellung der Pflückplatten (6) mittels Ankerplatten (12) erfolgt, die mit einem Verstellhebel (20) rotatorisch um eine Drehachse (14) beweglich sind, die Ankerplatten (12) jeweils zwei Gelenkachsen (16) aufweisen, über die benachbarte Pflückplatten (6) mit diesen Ankerplatten (12) verbunden sind und bei einer rotatorischen Bewegung dieser Ankerplatten (12) um ihre Drehachse über die Gelenkachsen (16) beide Pflückplatten (6) in Querrichtung beweglich sind, und wobei jede in Querrichtung verstellbare Pflückplatte (6) mit zwei separaten Ankerplatten (12) über eine jeweilige Gelenkachse (16) verbunden ist, wobei die Ankerplatten (12) beabstandet zueinander entlang des Pflückspaltes (4) angeordnet sind, und die Ankerplatten (12) auf der Oberseite eines jeweils zwischen zwei benachbarten Pflückspalten (4) angeordneten Längsträgers (18) angeordnet sind,
**dadurch gekennzeichnet, dass** die Ankerplatten (12) drehfest auf einer jeweiligen Welle gelagert sind, die durch den Längsträger (18) hindurch bis zur Unterseite des Längsträgers (18) hinabreicht, und der Verstellhebel (20) drehfest mit der Welle verbunden ist.

2. Vorrichtung nach Anspruch 1, **dadurch gekennzeichnet, dass** die Ankerplatten (12) unterhalb der einem Längsträger (18) zugeordneten Fördereinheiten (10) angeordnet sind.

3. Vorrichtung nach Anspruch 2, **dadurch gekennzeichnet, dass** die Wellen der Umlenkräder der Fördereinheiten (10) in einem Anstellwinkel schräg zur Pflückspaltebene angestellt sind.

4. Vorrichtung nach einem der vorhergehenden Ansprüche, **dadurch gekennzeichnet, dass** die Pflückplatten (6) in Längsführungen gehalten sind.

## Claims

1. Device for harvesting stalk-like stem crops, comprising:
- a number of picking units (2), which are arranged side by side on the frame of the device and which each have picking plates (6) that laterally delimit a picking gap (4) and are adjustable in the transverse direction, and at least one picking rotor (8) located therebeneath,
- conveying units (10), which are assigned to the respective picking units (2), are formed as continuous conveyors that are driven in circulation, are arranged on opposite sides above a picking gap (4), and are formed with carrier elements attached to the continuous conveyors, and
- a transverse conveying device arranged downstream of the conveying units (10), wherein the transverse adjustment of the picking plates (6) is carried out by means of anchor plates (12), which can be moved in rotation about an axis of rotation (14) by means of an adjusting lever (20), the anchor plates (12) each have two joint axes (16) via which adjacent picking plates (6) are connected to said anchor plates (12), and when these anchor plates (12) are rotated about their axes of rotation, the two picking plates (6) can be moved in the transverse direction via the joint axes (16) and wherein each picking plate (6) that is adjustable in the transverse direction is connected to two separate anchor plates (12) via a respective joint axis (16),
wherein the anchor plates (12) are arranged spaced apart from one another along the picking gap (4) and the anchor plates (12) are arranged on the upper side of a longitudinal beam (18) arranged between two adjacent picking gaps (4) in each case, **characterised in that** the anchor plates (12) are mounted non-rotatably on a respective shaft, which extends downward through the longitudinal beam (18) to the underside of the longitudinal beam (18), and the adjusting lever (20) is connected non-rotatably to the shaft.

2. Device according to claim 1, **characterised in that** the anchor plates (12) are arranged below the conveying units (10) that are assigned to a longitudinal beam (18).

3. Device according to claim 2, **characterised in that** the shafts of the deflecting wheels of the conveying units (10) are set at a setting angle obliquely in relation to the picking gap plane.

4. Device according to any one of the preceding claims, **characterised in that** the picking plates (6) are held in longitudinal guides.

## Revendications

1. Dispositif de récolte de céréales à tiges comprenant :
- un certain nombre d'unités de cueillette (2) disposées les unes à côté des autres sur le châssis du dispositif, lesquelles unités de cueillette présentent à chaque fois des plaques de cueillette (6) délimitant latéralement une fente de cueillette (4) et réglables dans le sens transversal, et présentent au moins un rotor de cueillette (8) se trouvant au-dessous desdites plaques de cueillette,
- des unités de transport (10) associées aux unités de cueillette respectives (2), unités de transport qui sont conçues comme des transporteurs continus entraînés en rotation et disposés sur des côtés opposés au-dessus d'une fente de cueillette (4), et conçues en ayant des éléments d'entraînement fixés sur les transporteurs continus, et
- un dispositif de transport transversal disposé en aval des unités de transport (10), où le réglage transversal des plaques de cueillette (6) est effectué au moyen de plaques d'ancrage (12) qui, avec un levier de réglage (20), sont mobiles en tournant autour d'un axe de rotation (14), où les plaques d'ancrage (12) présentent à chaque fois deux axes d'articulation (16) par lesquels des plaques de cueillette adjacentes (6) sont reliées à ces plaques d'ancrage (12), et au cours d'un mouvement de rotation de ces plaques d'ancrage (12) autour de leur axe de rotation, les deux plaques de cueillette (6), par les axes d'articulation (16), sont mobiles dans le sens transversal, et où chaque plaque de cueillette (6) réglable dans le sens transversal est reliée, par un axe d'articulation respectif (16), à deux plaques d'ancrage séparées (12), où les plaques d'ancrage (12) sont disposées en étant espacées les unes des autres le long de la fente de cueillette (4), et les plaques d'ancrage (12) sont disposées sur la partie supérieure d'un longeron (18) se trouvant à chaque fois entre deux fentes de cueillette adjacentes (4),
**caractérisé en ce que** les plaques d'ancrage (12) sont montées en étant solidaires en rotation sur un arbre respectif qui, en traversant tout le longeron (18), s'étend en descendant jusqu'à la partie inférieure du longeron (18), et le levier de réglage (20) est relié à l'arbre en étant solidaire en rotation.

2. Dispositif selon la revendication 1, **caractérisé en ce que** les plaques d'ancrage (12) sont disposées au-dessous des unités de transport (10) associées à un longeron (18).

3. Dispositif selon la revendication 2, **caractérisé en ce que** les arbres des roues de renvoi des unités de transport (10) sont placés suivant un angle d'incidence incliné par rapport au plan de la fente de cueillette.

4. Dispositif selon l'une quelconque des revendications précédentes, **caractérisé en ce que** les plaques de cueillette (6) sont tenues dans des guides longitudinaux.
